(19) Europäisches Patentamt
European Patent Office
Office européen des brevets

(11) EP 4 428 980 A1

(12) **EUROPEAN PATENT APPLICATION**
published in accordance with Art. 153(4) EPC

(43) Date of publication:
**11.09.2024 Bulletin 2024/37**

(21) Application number: **22890364.7**

(22) Date of filing: **02.11.2022**

(51) International Patent Classification (IPC):
***H01M 10/0567*** *(2010.01)* ***H01M 10/052*** *(2010.01)*

(52) Cooperative Patent Classification (CPC):
**H01M 10/052; H01M 10/0567;** Y02E 60/10

(86) International application number:
**PCT/KR2022/017032**

(87) International publication number:
**WO 2023/080633 (11.05.2023 Gazette 2023/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.11.2021 KR 20210151673**
**12.11.2021 KR 20210156004**
**11.02.2022 KR 20220018302**

(71) Applicant: **Soulbrain Co., Ltd.**
**Seongnam-si, Gyeonggi-do 13486 (KR)**

(72) Inventors:
- **YUN, Jong Cheol**
  **Seongnam-si, Gyeonggi-do 13486 (KR)**
- **KIM, Min Goo**
  **Seongnam-si, Gyeonggi-do 13486 (KR)**
- **LEE, Sang Ho**
  **Seongnam-si, Gyeonggi-do 13486 (KR)**
- **JANG, Min Jung**
  **Seongnam-si, Gyeonggi-do 13486 (KR)**
- **HAN, Ji Seong**
  **Seongnam-si, Gyeonggi-do 13486 (KR)**

(74) Representative: **Dehns**
**St. Bride's House**
**10 Salisbury Square**
**London EC4Y 8JD (GB)**

(54) **ELECTROLYTE AND SECONDARY BATTERY COMPRISING SAME**

(57) The present invention relates to an electrolyte and a secondary battery including the same. More particularly, the present invention relates to an electrolyte including a compound represented by Chemical Formula 1 below and an acid, a method of preparing the electrolyte, and a secondary battery including the electrolyte.

[Chemical Formula 1] PxOy

In Chemical Formula 1, P is phosphorus, O is oxygen, x is a multiple of 2, and y is 5x/2.

According to the present invention, the present invention has an effect of providing a secondary battery that is capable of being charged rapidly due to reduced charge resistance, has excellent output due to reduced discharge resistance, is capable of being stored for a long time, has a long lifespan, and has excellent high-temperature capacity retention rate.

EP 4 428 980 A1

## Description

[Technical Field]

The present invention relates to an electrolyte and a secondary battery including the same, and more particularly, to an electrolyte capable of improving the charging efficiency and output of batteries, being stored for a long time, and greatly increasing capacity retention rate at high temperatures and a secondary battery including the same.

[Background Art]

In a lithium secondary battery, an electrolyte contained between a cathode and an anode enables smooth movement of lithium ions. Electric energy may be easily used according to the method in which electricity is generated or consumed by oxidation-reduction reaction according to insertion and desorption at the cathode and anode.
Recently, environmental regulations have been strengthened worldwide, and interest in the environment has increased. Accordingly, interest in eco-friendly vehicles that can replace fossil fuel vehicles that cause air pollution is also increasing. Accordingly, domestic and foreign battery industries are actively developing automobile batteries.
To use batteries in automobiles, the output and capacity of the batteries must be significantly increased. In addition, the output of the batteries should be improved at high and low temperatures according to various weather conditions, and the problem of resistance increase should be solved. Considering that automobiles are used outdoors regardless of the season, batteries with improved long-term charging and capacity retention rate in various environments are required.

[Related Art Documents]

[Patent Documents]

JP 2008-300126 A
KR 10-1586199 B1

[Disclosure]

[Technical Problem]

Therefore, the present invention has been made in view of the above problems, and it is one object of the present invention to provide an electrolyte having a novel composition including a predetermined small amount of phosphorus oxide and a predetermined excess amount of an acid as additives of a secondary battery, and a secondary battery including the electrolyte. According to the present invention, due to noncovalent interaction between the phosphorus oxide and the acid, the performance of a battery including the electrolyte may be significantly improved.
It is another object of the present invention to provide a secondary battery that is capable of being charged rapidly due to reduced charge resistance, has significantly improved battery output due to reduced discharge resistance, is capable of being stored for a long time due to improved recovery capacity at high temperatures, and has excellent lifespan retention rate at high temperatures.
The above and other objects can be accomplished by the present invention described below.

[Technical Solution]

I) In accordance with one aspect of the present invention, provided is an electrolyte including a compound represented by Chemical Formula 1 below and an acid:

[Chemical Formula 1] PxOy,

wherein P is phosphorus, O is oxygen, x is a multiple of 2, and y is 5x/2.
II) In I), the electrolyte may preferably include 1 to 20 % by weight of the compound represented by Chemical Formula 1 and 80 to 99 % by weight of the acid.

III) In I) to II), when the compound represented by Chemical Formula 1 is included in an amount of 1 to 20 % by weight, a pH of the acid may be 3.5 or less.

IV) In I) to III), the electrolyte may preferably be a liquid electrolyte, a semi-solid electrolyte, or a solid electrolyte.

V) In I) to IV), the compound represented by Chemical Formula 1 may preferably be $P_2O_5$, $P_4O_{10}$, or a mixture thereof.

VI) In I) to V), the acid may preferably be an inorganic acid or an organic acid.

VII) In I) to VI), the acid may preferably include one or more selected from the group consisting of phosphoric acid, nitric acid, sulfuric acid, and alkylsulfonic acid.

VIII) In I) to VII), the electrolyte may preferably include an acidic PxOy solution obtained by dissolving the compound represented by Chemical Formula 1 in the acid.

IX) In I) to VIII), the electrolyte may preferably include an organic solvent.

X) In I) to IX), the organic solvent may preferably include one or more selected from the group consisting of ethylene carbonate (EC), diethyl carbonate (DEC), ethylmethyl carbonate (EMC), dimethyl carbonate (DMC), propylene carbonate (PC), dipropyl carbonate (DPC), butylene carbonate, methylpropyl carbonate, ethylpropyl carbonate, methyl propionate (MP), ethyl propionate (EP), and propyl propionate (PP).

XI) In I) to X), the electrolyte may preferably include lithium salt.

XII) In I) to XI), the lithium salt may preferably include one or more selected from the group consisting of $LiPF_6$, LiFS $LiF_4$, LiCl, LiBr, LiI, $LiClO_4$, $LiB_{10}Cl_{10}$, $LiCF_3SO_3$, $LiCF_3CO_2$, $LiAsF_6$, LiSbF6, $LiAlCl_4$, $CH_3SO_3Li$, $CF_3SO_3Li$, and $(CF_3SO_2)_2NLi$.

XIII) In I) to XII), based on a total amount of the electrolyte, the electrolyte may preferably include the lithium salt at a concentration of 0.6 to 2 M.

XIV) In accordance with another aspect of the present invention, provided is a method of preparing an electrolyte, the method including preparing an acidic PxOy solution by mixing a compound represented by Chemical Formula 1 below and an acid; and mixing the prepared acidic PxOy solution with an electrolyte solvent or lithium salt:

[Chemical Formula 1] PxOy,

wherein P is phosphorus, O is oxygen, x is a multiple of 2, and y is 5x/2.

XV) In I) to XIV), the acidic PxOy solution may have a pH of 3.5 or less.

XVI) In accordance with still another aspect of the present invention, provided is an additive for secondary battery electrolytes including a compound represented by Chemical Formula 1 below and an acid:

[Chemical Formula 1] PxOy,

wherein P is phosphorus, O is oxygen, x is a multiple of 2, and y is 5x/2.

XVII) In I) to XVI), the additive may include 1 to 20 % by weight of the compound represented by Chemical Formula 1 and 80 to 99 % by weight of the acid.

XVIII) In accordance with yet another aspect of the present invention, provided is a secondary battery including an anode, a cathode, and an electrolyte, wherein the electrolyte is the electrolyte according to I) to XVII).

XIX) In I) to XVIII), the secondary battery may preferably be a battery for automobiles.

[Advantageous Effects]

When the electrolyte according to the present invention is used as an electrolyte of a secondary battery, due to reduced charge resistance, the charging efficiency and output of the secondary battery can be greatly improved. In addition, the secondary battery can be stored for a long time, has a long lifespan, and has excellent high-temperature capacity retention rate.

[Best Mode]

Hereinafter, the present invention will be described in detail, but the present invention is not limited thereto.

## Electrolyte

The present invention provides an electrolyte including a compound represented by Chemical Formula 1 below and an acid.

[Chemical Formula 1] PxOy

In Chemical Formula 1, P is phosphorus, O is oxygen, x is a multiple of 2, and y is 5x/2. In this case, due to the noncovalent interaction between phosphorus oxide and an acid, the battery including the electrolyte may be significantly improved. Specifically, charge resistance may be reduced, and rapid charging may be allowed. In addition, discharge resistance may be reduced, thereby improving battery output. In addition, long-term storage may be realized due to improved recovery capacity at high temperatures, and lifespan retention rate may be excellent at high temperatures.

As the electrolyte of the present invention, any type of electrolyte applicable to batteries may be used without any particular limitation. For example, the electrolyte of the present invention may be a liquid electrolyte.

The electrolyte including PxOy (x is a multiple of 2, and y is 5x/2) and the acid may include 1 to 20 % by weight of PxOy and 80 to 99 % by weight of the acid, preferably 2 to 15 % by weight of PxOy and 85 to 98 % by weight of the acid, more preferably 5 to 13 % by weight of PxOy and 87 to 95 % by weight of the acid. In this case, by including a predetermined small amount of phosphorus oxide and a predetermined excess amount of an acid as additives of a secondary battery, due to noncovalent interaction between phosphorus oxide and the acid, the performance of a battery including the electrolyte may be significantly improved. In particular, manufacturing efficiency may be improved due to excellent compatibility with the electrolyte, and the output of the battery may be further improved.

PxOy may preferably include one or more selected from $P_2O_5$ and $P_4O_{10}$, preferably $P_2O_5$, without being limited thereto.

For example, the acid may be an inorganic acid or an organic acid. Preferably, the acid may include one or more selected from phosphoric acid, nitric acid, sulfuric acid, acetic acid, trifluoromethanesulfonic acid, fluorosulfonic acid, and alkylsulfonic acid, more preferably an alkylsulfonic acid with an alkyl group having 1 to 5 carbon atoms, more preferably methanesulfonic acid or ethanesulfonic acid, still more preferably methanesulfonic acid, without being limited thereto.

The electrolyte including PxOy (x is a multiple of 2, and y is 5x/2)and the acid may be added to the electrolyte of a secondary battery to form a stable film on an electrode. At this time, the stability of the film may prevent decomposition of the electrolyte, thereby improving cycle characteristics. In particular, compared to conventional electrode films that decompose at high temperatures and have poor high-temperature storage properties, since the film according to the present invention do not decompose at high temperatures, high-temperature storage properties may be greatly improved. In addition, charging efficiency and output may be improved by preventing an increase in resistance. In addition, since gas generation due to chemical reactions inside a battery is also suppressed, safety of the battery may be improved. In addition, capacity retention rate may be improved by preventing structural collapse of the electrode active materials of a cathode and anode at high temperatures, thereby increasing the lifespan of a battery.

For example, when the compound represented by Chemical Formula 1 is included in an amount of 1 to 20 % by weight, the pH of the acid may be 3.5 or less, -4 to 3.5, - 3 to 3.5, -2 to 3.5, or -1.75 to 3.5, preferably -0.1 to 3.5 or -0.5 to 3.5, more preferably 0 to 3.5, still more preferably 0 to 3, still more preferably 0 to 2, most preferably 0 to 1. Within this range, charge resistance may be reduced, rapid charging may be allowed, and discharge resistance may be reduced, thereby improving battery output. In addition, long-term storage may be realized due to improved recovery capacity at high temperatures. In addition, lifespan retention rate at high temperatures may be excellent.

In addition, the present invention provides an electrolyte including PxOy (x is a multiple of 2, and y is 5x/2) and the acid and an organic solvent and/or lithium salt.

For example, the organic solvents may include one or more selected from the group consisting of ethylene carbonate (EC), diethyl carbonate (DEC), ethylmethyl carbonate (EMC), dimethyl carbonate (DMC), propylene carbonate (PC), dipropyl carbonate (DPC), butylene carbonate, methylpropyl carbonate, ethylpropyl carbonate, methyl propionate (MP), ethyl propionate (EP), and propyl propionate (PP), preferably two or more selected from the group. In this case, the ionic conductivity and viscosity of the electrolyte may be easily controlled, thereby improving battery performance.

As a specific example, as the organic solvent, a mixed solvent prepared by mixing an organic solvent having high permittivity and high ion conductivity to improve the charge/discharge performance of a battery and a low-viscosity organic solvent having suitable viscosity for battery application may be used. More specifically, the high- permittivity organic solvent may include EC and/or PC, and the low-viscosity organic solvent may include one or more selected from the group consisting of EMC, DMC, and DEC.

The high-permittivity and low-viscosity organic solvents are preferably mixed in a volume ratio of 2:8 to 8:2. More specifically, a three-component mixed solvent of EC and/or PC, EMC, and DEC may be used. The ratio of EC and/or PC : EMC : DEC may be 1 : 3 to 5 : 2 to 4.

When the organic solvents contain water, since lithium ions in the electrolyte may be hydrolyzed, the water content in the organic solvents is preferably adjusted to 150 ppm or less, preferably 100 ppm or less.

For example, the electrolyte may further include one or more selected from the group consisting of $LiPF_6$, LiFSI, $LiF_4$, LiCl, LiBr, LiI, $LiClO_4$, $LiB_{10}Cl_{10}$, $LiCF_3SO_3$, $LiCF_3CO_2$, $LiAsF_6$, $LiSbF_6$, $LiAlCl_4$, $CH_3SO_3Li$, $CF_3SO_3Li$, and $(CF_3SO_2)_2NLi$ as the lithium salt. In this case, the supply of lithium ions may be further promoted.

Preferably, as the lithium salt, the electrolyte may include one or more selected from the group consisting of $LiPF_6$ and LiFSI, more preferably $LiPF_6$. In this case, the supply of lithium ions to the battery may be promoted, thereby

improving battery performance.

For example, as the lithium salt, the electrolyte may further include one or more selected from the group consisting of $LiF_4$, LiCl, LiBr, LiI, $LiClO_4$, $LiB_{10}Cl_{10}$, $LiCF_3SO_3$, $LiCF_3CO_2$, $LiAsF_6$, $LiSbF_6$, $LiAlCl_4$, $CH_3SO_3Li$, $CF_3SO_3Li$, and $(CF_3SO_2)_2NLi$. In this case, the supply of lithium ions may be further promoted.

When the lithium salt is dissolved in the electrolyte, the lithium salt functions as a source of lithium ions in the secondary battery to promote movement of lithium ions between the cathode and the anode. Accordingly, the lithium salt is preferably included in the electrolyte at a concentration of approximately 0.6 M to 2 M. When the concentration of the lithium salt is less than 0.6 M, the conductivity of the electrolyte may be reduced, resulting in deterioration of electrolyte performance. When the concentration of the lithium salt exceeds 2 M, the viscosity of the electrolyte may be increased, resulting in reduction in the mobility of lithium ions. Considering the conductivity of the electrolyte and the mobility of lithium ions, the lithium salt may be included in the electrolyte in an amount of preferably 0.7 M to 1.6 M, more preferably 0.8 M to 1.5 M, still more preferably 0.9 M to 1.3 M.

In the present disclosure, unless otherwise defined, M refers to the number of moles of a solute contained in 1 L of a solution.

In addition to PxOy (x is a multiple of 2, and y is 5x/2) and the acid, the electrolyte of the present invention may further include commercially available additives that are generally used in electrolytes for the purpose of improving the lifespan characteristics of a battery, suppressing a decrease in battery capacity, and improving the discharge capacity of a battery.

The commercially available additives may include preferably one or more selected from the group consisting of vinylene carbonate (VC), fluoroethylene carbonate (FEC), vinylethylene carbonate (VEC), ethyl propionate, propyl propionate, 1,2-bis((difluorophosphaneyl)oxy)ethane, 2-fluoro-4-methyl-[1,3,2]-dioxaphospholane, difluoro(pentyloxy)phosphane, 1,3,6-hexanetricarbonitrile (HTCN), succinonitrile (SN), adiponitrile (AN), 4-tolunitrile, lithium bis(oxalato)borate (LiBOB), lithium difluoro (oxalate) borate (LiDFOB), lithium tetrafluoroborate ($LiBF_4$), tris(trimethylsilyl)borate, triisopropyl borate, trimethoxyboroxine, lithium tetrafluro(oxalato) phosphate, lithium difluro(bisoxalato) phosphate, lithium difluorophosphate, tris(trimethylsilyl) phosphite, tripropagyl phosphate, triphenyl phosphate, 2,4,8,10-tetraoxa-3,9-dithiaspiro[5.5]undecane-3,3,9,9-tetraoxide, dimethyl sulfate, ethylene dimethanesulfonate, lithium bis(fluorosulfonyl)imide (LiFSI), ethylene sulfate, 1-propene-1,3-sultone, 1,3-propane sultone, 1,3-propylene sulfate, 1,4-butane sultone, sulfolene, biphenyl, cyclohexyl benzene, 4-fluorotoluene, fluorobenzene, 2-fluoro-biphenyl, 3-fluoro-biphenyl, and 2-[(2,2-dioxido-1,2-oxathiolan-4-yl)oxy]-1,3,2-dioxaphospholane.

Among the commercially available additives, one additive may be used along or two or more additives may be mixed and used. For example, fluoroethylene carbonate, 1,3-propanesultone, 1,3-propensultone, or ethylene sulfate may be used alone, or a combination of fluoroethylene carbonate and 1,3-propanesultone may be used, without being limited thereto.

Based on a total weight of the electrolyte, the commercially available additives may be included in an amount of 0.01 to 20 % by weight, preferably 0.1 to 10 % by weight.

For example, the electrolyte may have a pH of 3.5 or less, -4 to 3.5, -3 to 3.5, -2 to 3.5, or -1.75 to 3.5, preferably -0.1 to 3.5 or -0.5 to 3.5, more preferably 0 to 3.5, still more preferably 0 to 3, still more preferably 0 to 2, still more preferably 0 to 1, as another example, 2 to 3.5, as another preferred example, 2 to 3, as another preferred example, 2.5 to 3. By having a relatively low pH range compared to the prior art, charge resistance may be reduced, and rapid charging may be allowed. In addition, discharge resistance may be reduced, thereby improving battery output. In addition, long-term storage may be realized due to improved recovery capacity at high temperatures, and lifespan retention rate may be excellent at high temperatures.

## Method of preparing electrolyte

The present invention provides a method of preparing an electrolyte, the method including a step of preparing an acidic PxOy solution by mixing a compound represented by Chemical Formula 1 below and an acid; and a step of mixing the prepared acidic PxOy solution with an electrolyte solvent or lithium salt.

[Chemical Formula 1] PxOy

In Chemical Formula 1, P is phosphorus, O is oxygen, x is a multiple of 2, and y is 5x/2.

For example, the acidic PxOy solution may have a pH of 3.5 or less, -4 to 3.5, -3 to 3.5, -2 to 3.5, or -1.75 to 3.5, preferably -0.1 to 3.5 or -0.5 to 3.5, more preferably 0 to 3.5, still more preferably 0 to 3, still more preferably 0 to 2, most preferably 0 to 1. Within this range, battery output may be improved due to reduced charge resistance, and long-term storage may be realized due to improved recovery capacity at high temperatures. In addition, lifespan retention rate at high temperatures may be excellent.

In the present disclosure, pH measurement methods commonly used in the technical field to which the present

invention pertains may be used in the present invention without particular limitation. For example, pH may be measured using a general pH measuring device such as a pH meter or pH paper at a room temperature of 20 to 25 °C. As a non-limiting specific example, pH may be measured using a Mettler Toledo Seven Compact pH meter. In the range of pH 1 or higher, pH may be easily measured using pH Test Paper (Doosan Scientific). However, when the pH measuring device is specified, even when the actual pH value is outside the measurement range of the pH measuring device, the value displayed on the pH measuring device may be recognized as the pH value according to the present invention.

Since the method of preparing the electrolyte of the present invention includes all the information mentioned in the electrolyte, the description thereof is omitted here to avoid complexity.

## Secondary battery

The present invention provides a secondary battery including an anode, a cathode, a separator disposed between the anode and cathode, and the electrolyte of the present invention. By including a predetermined small amount of phosphorus oxide and a predetermined excess amount of an acid as additives of a secondary battery, due to the noncovalent interaction between the phosphorus oxide and the acid, the performance of the battery may be significantly improved.

For example, the cathode may be manufactured by preparing a composition for forming a cathode active material layer by mixing a cathode active material, a binder, and optionally a conductive material, and then applying the composition to a cathode current collector such as aluminum foil.

For example, as the cathode active material, a common high-nickel cathode active material used in lithium secondary batteries, an NCM (lithium nickel manganese cobalt oxide) cathode active material, an NCA (lithium nickel cobalt aluminum oxide) cathode active material, or an LFP (lithium iron phosphate) cathode active material may be used. Preferably, a lithium complex metal oxide represented by the Chemical Formula of $Li[NixCo_{1-x-y}Mn_y]O_2$ (here 0<x<1, 0<y<1) may be used as the cathode active material. As a specific example, $LiNiMnCoO_2$ may be used as the cathode active material, but the present invention is not limited thereto.

For example, in the Chemical Formula of $Li[NixCo_{1-x-y}Mn_y]O_2$ representing the lithium complex metal oxide, the variables x and y may satisfy 0.0001<x<1, 0.0001<y<1, as a preferred example, 0.5<x<1, 0.001<y<5, as a more preferred example, 0.6<x<0.9999, 0.0001<y<0.4, as a still more preferred example, 0.7<x<0.999, 0.001<y<0.3, as another example, 0.0001<x<0.5, 0.0001<y<0.5, or 0.001<x<0.3, 0.001<y<0.3.

As another example, as the cathode active material, a compound (lithiated intercalation compound) capable of reversible intercalation and deintercalation of lithium may be used.

Among the compounds, from the viewpoint of improving the capacity characteristics and stability of a battery, one or more selected from the group consisting of $LiCoO_2$, $LiMnO_2$, $LiMn_2O_4$, $LiNiO_2$, $LiNi_xMn_{(1-x)}O_2$ (0<x<1), and $LiM1_xM2_yO_2$ (0≤x≤1, 0≤y≤1, 0≤x+y≤1, and M1 and M2 each independently includes any one selected from the group consisting of Al, Sr, Mg, and La) are preferably used.

For example, the anode may be manufactured by preparing a composition for forming an anode active material layer by mixing an anode active material, a binder, and optionally a conductive agent, and then applying the composition to an anode current collector such as copper foil.

For example, as the anode active material, a compound capable of reversible intercalation and deintercalation of lithium may be used.

As a specific example, the anode active material may be a carbonaceous material such as a Si-based anode active material, artificial graphite, natural graphite, graphitized carbon fiber, or amorphous carbon.

In addition to the carbonaceous material, a metallic compound capable of being alloyed with lithium or a composite containing a metallic compound and a carbonaceous material may be used as the anode active material. For example, the carbonaceous material may be graphite.

For example, the metal capable of being alloyed with lithium may include any one of Si, Al, Sn, Pb, Zn, Bi, In, Mg, Ga, Cd, Si alloy, Sn alloy, and Al alloy.

In addition, a metal lithium thin film may be used as the anode active material.

As the anode active material, one or more selected from the group consisting of crystalline carbon, amorphous carbon, carbon composite, lithium metal, and alloy including lithium may be used in terms of high stability.

In the secondary battery of the present invention, by adding the electrolyte including the PxOy (x is a multiple of 2, and y is 5x/2) and the acid, compared to conventional secondary batteries, battery charge resistance and output measured by hybrid pulse power characterization (HPPC) and battery characteristics, such as capacity recovery characteristics and lifespan characteristics, measured at a high temperature of 45 °C or higher may be significantly improved.

As specific example, the secondary battery of the present invention may have an HPPC charge resistance value of 40 mΩ or less, preferably 38 mΩ or less, still more preferably 37 mΩ, most preferably 36 mΩ or less as measured at 45 °C. Within this range, battery performance may be excellent.

In addition, the secondary battery may have a recovery capacity of 750 mAh or more, preferably 760 mAh or

more, more preferably 780 mAh or more as measured at 60°C. Within this range, battery performance may be excellent.

The secondary battery may have a high-temperature lifespan efficiency (%) of 92 % or more, preferably 94 % or more, more preferably 95 % or more as measured at 45°C. Within this range, battery performance may be excellent.

For example, the secondary battery may have a DCIR resistance (mΩ) of 35 or less, preferably 34 or less, more preferably 33 or less. Within this range, battery performance may be excellent.

For example, the secondary battery may have a discharge resistance (mΩ) of 42 or less, preferably 41 or less, more preferably 40 or less as measured after storage at a high temperature of 60°C for 4 weeks. Within this range, battery performance may be excellent.

For example, the secondary battery may have a DCIR increase rate (%) of 25 or less, preferably 22 or less, more preferably 18 or less. Within this range, battery performance may be excellent.

For example, the secondary battery may have a cell thickness of 3.40 or less, preferably 3.30 or less, more preferably 3.25 or less as measured after storage at a high temperature of 60°C for 4 weeks. Within this range, battery performance may be excellent.

For example, the secondary battery may have a thickness increase rate (%) of 12 or less, preferably 11 or less, more preferably 9 or less. Within this range, battery performance may be excellent.

As a specific example, the HPPC charge resistance value measured at 60°C may be expressed as a battery resistance value measured after leaving the secondary battery in a fully charged state at 60 °C for 5 hours.

As a specific example, when the recovery capacity at 60 °C is measured, the initial discharge capacity is measured by charging and discharging the secondary battery at 60 °C. The secondary battery is charged again under the same conditions, is stored at 60°C for 4 weeks, and then is discharged again at 60°C. Then, remaining capacity is measured. At this time, the recovery capacity at 60°C may be expressed as the remaining capacity.

As a specific example, the high-temperature lifespan maintenance efficiency at 45 °C may be expressed as a percentage (%) of discharge capacity after repeating 300 cycles with respect to initial discharge capacity by repeating 300 cycles of charging and discharging of the secondary battery at 45 °C.

In the present disclosure, the HPPC charge resistance value may be measured by the method prescribed in the document "Battery test manual for plug-in hybrid electric vehicles (2010, Idaho National Laboratory for the U.S. Department of Energy)", and is an important index representing battery output characteristics. In addition, charge resistance is a resistance value measured during charging of a battery. As the charge resistance decreases, energy loss may be reduced, charging speed may be increased, and the output of a battery may be improved. Since the secondary battery of the present invention has a low HPPC charge resistance value as described above, the secondary battery of the present invention has excellent charging speed and output, and thus is suitable for use as a battery for automobiles.

In the present disclosure, the recovery capacity represents the capacity conservation characteristics of a battery that has been left unattended for a long time. A discharged electric capacity when a battery left for a long time is discharged to a discharge end voltage and a discharged electric capacity when the discharged battery is recharged and discharged again to the discharge end voltage are measured. The two capacity values are compared. A high recovery capacity value means that the amount of natural discharge due to battery preservation (storage) is small, that is, a battery may be preserved for a long time. In particular, since the natural discharge rate increases as the storage temperature of a battery increases, recovery capacity at high temperatures is a very important characteristic in batteries for automobiles.

When the electrolyte additives of the present invention are added to an electrolyte, recovery capacity is improved to 5 to 20 % compared to using conventional additives. That is, long-term storage is possible with a single charge.

Therefore, when the battery of the present invention is used as an electric battery for automobiles, output, which depends on the size of an automobile, may be improved. In addition, considering climate change and the environment of an automobile exposed to sunlight while driving or parking, automobile performance at low and high temperatures may be improved. That is, the battery of the present invention may exhibit excellent performance as an automotive battery.

Therefore, when the electrolyte additives according to embodiments of the present invention and the electrolyte including the same are applied to a secondary battery, charge resistance, output, recovery capacity, and lifespan efficiency may be improved, and thus the electrolyte is suitable for use as a secondary battery for automobiles.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

**[Examples: Preparing electrolyte solution for batteries]**

Hereinafter, the concentration (M) of lithium salt and the amount (wt%) of electrolyte additives are based on the total amount of an electrolyte solution.

Example 1

1.15 M $LiPF_6$ as a lithium salt; and 0.5 % by weight of an acidic phosphorus pentoxide solution prepared by dissolving 3 % by weight of phosphorus pentoxide ($P_2O_5$) in methane sulfonic acid as an electrolyte additive were added to a carbonate-based mixed solvent containing EC, EMC, and DEC in a volume ratio of 2:4:4 (EC:EMC:DEC) to prepare an electrolyte solution for batteries. At this time, the pH of the acidic phosphorus pentoxide solution was 0 to 1, and the pH of the prepared electrolyte solution was 3. For reference, the pH of an electrolyte solution without the acidic phosphorus pentoxide solution was 4.

Example 2

An electrolyte solution for batteries was prepared in the same manner as Example 1 except that an acidic phosphorus pentoxide solution prepared by dissolving 5 % by weight of phosphorus pentoxide ($P_2O_5$) in methane sulfonic acid was used as an electrolyte additive. At this time, the pH of the acidic phosphorus pentoxide solution was 0 to 1, and the pH of the prepared electrolyte solution was 3.

Example 3

An electrolyte solution for batteries was prepared in the same manner as Example 1 except that an acidic phosphorus pentoxide solution prepared by dissolving 7.7 % by weight of phosphorus pentoxide ($P_2O_5$) in methane sulfonic acid was used as an electrolyte additive. At this time, the pH of the acidic phosphorus pentoxide solution was 0 to 1, and the pH of the prepared electrolyte solution was 3.

Example 4

An electrolyte solution for batteries was prepared in the same manner as Example 3 except that fluorosulfonic acid was used instead of methane sulfonic acid. At this time, the pH of the acidic phosphorus pentoxide solution was 0 to 1.

Example 5

An electrolyte solution for batteries was prepared in the same manner as Example 3 except that ethanesulfonic acid was used instead of methane sulfonic acid. At this time, the pH of the acidic phosphorus pentoxide solution was 0 to 1.

Example 6

An electrolyte solution for batteries was prepared in the same manner as Example 3 except that sulfuric acid was used instead of methane sulfonic acid. At this time, the pH of the acidic phosphorus pentoxide solution was 0 to 1, and the pH of the prepared electrolyte solution was 3.

Example 7

An electrolyte solution for batteries was prepared in the same manner as Example 3 except that 2 % by weight of an acidic phosphorus pentoxide solution as an electrolyte additive was added. At this time, the pH of the acidic phosphorus pentoxide solution was 0 to 1, and the pH of the prepared electrolyte solution was 2.5.

Example 8

An electrolyte solution for batteries was prepared in the same manner as Example 3 except that 1 % by weight of an acidic phosphorus pentoxide solution as an electrolyte additive was added. At this time, the pH of the acidic phosphorus pentoxide solution was 0 to 1.

Example 9

An electrolyte solution for batteries was prepared in the same manner as Example 3 except that 0.3 % by weight of an acidic phosphorus pentoxide solution as an electrolyte additive was added. At this time, the pH of the acidic phosphorus pentoxide solution was 0 to 1.

Example 10

An electrolyte solution for batteries was prepared in the same manner as Example 3 except that 1 % by weight of vinylene carbonate (VC) was added to the electrolyte solution for batteries. At this time, the pH of the acidic phosphorus pentoxide solution was 0 to 1.

Comparative Example 1

The same process as Example 1 was performed except that, instead of the acidic phosphorus pentoxide solution, only phosphorus pentoxide was added as an electrolyte additive.

Comparative Example 2

The same process as Example 1 was performed except that, instead of the acidic phosphorus pentoxide solution, 0.5 % by weight of methane sulfonic acid was added as an electrolyte additive.

Comparative Example 3

The same process as Example 1 was performed except that, instead of the acidic phosphorus pentoxide solution, 0.5 % by weight of sulfuric acid was added as an electrolyte additive.

Comparative Example 4

The same process as Example 1 was performed except that, instead of the acidic phosphorus pentoxide solution, 0.5 % by weight of a compound ((diethoxyphosphoryl)methyl methanesulfonate) represented by Chemical Formula A below was added as an electrolyte additive. At this time, the pH of the compound represented by Chemical Formula A below was 6, and the pH of the prepared electrolyte solution was 4.

[Chemical Formula A]

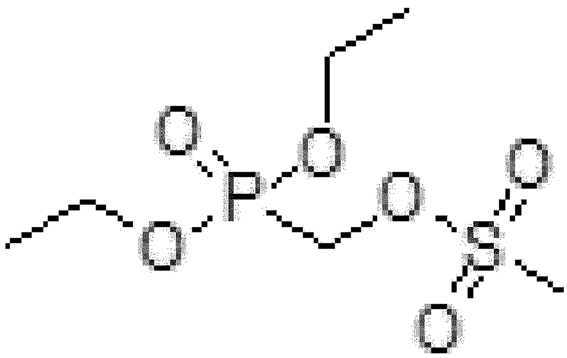

**Manufacture of battery**

95.5 % by weight of $Li(Ni_{0.8}Co_{0.1}Mn_{0.1})O_2$ as a cathode active material, 2.5 % by weight of carbon black as a conductive material, and 2 % by weight of polyvinylidene fluoride (PVdF) as a binder were added to N-methyl-2-pyrrolidone (NMP) as a solvent to prepare cathode mixture slurry. The cathode mixture slurry was applied onto an aluminum (Al) thin film having a thickness of about 20 μm as a cathode current collector, followed by drying. Then, the dried thin film was subjected to roll pressing to manufacture a cathode.

95.1 % by weight of carbon powder as an anode active material, 1.2 % by weight of a mixture containing carboxymethyl cellulose (CMC) and styrene-butadiene rubber (SBR) in a weight ratio of 3:7 or PVDF as a binder, and 3.7 % by weight of carbon black as a conductive material were added to NMP (when the binder is PVDF) or water (when the binder is CMC/SBR) as a solvent to prepare anode mixture slurry. The anode mixture slurry was applied onto a copper (Cu) thin film having a thickness of 10 μm as an anode current collector, followed by drying. Then, the dried thin film was subjected to roll pressing to manufacture an anode.

Using the manufactured cathode and anode and a separator composed of 3 layers of polypropylene/polyethylene/polypropylene (PP/PE/PP), a pouch-type battery was manufactured according to a conventional method. The

electrolytes prepared in Examples 1 to 10 and Comparative Examples 2 to 4 were injected into the battery to complete manufacture of a lithium secondary battery.

Test Examples

The performance of each manufactured secondary battery was evaluated according to the following methods, and the results are shown in Table 1 below.

[Initial DCIR resistance (mΩ) evaluation]

After standing at 60 °C for 5 hours, a voltage value, a charge/discharge current value corresponding to C-rate, current change (△I), discharge voltage change (△V), charge voltage change (△V), discharge resistance, and charge resistance were measured. Then, charge/discharge current for each C-rate was briefly flowed for a certain time, and a resistance value was calculated with a slope value obtained from current and voltage change.

[Discharge resistance (mQ) after high-temperature storage (60 °C, 4 weeks)]

After standing at 60 °C for 4 weeks, a voltage value, a charge/discharge current value corresponding to C-rate, current change (△I), discharge voltage change (△V), charge voltage change (△V), discharge resistance, and charge resistance were measured. Then, charge/discharge current for each C-rate was briefly flowed for a certain time, and a resistance value was calculated with a slope value obtained from current and voltage change.

[DCIR increase rate (%)]

DCIR increase rate (%) = { (High-temperature 4 week discharge DCIR - High-temperature initial discharge DCIR) / High-temperature initial discharge DCIR} × 100

[Evaluation of high-temperature recovery capacity]

After standing at 60 °C for 5 hours, charging was performed at a constant current of 1.0 C and a voltage of 4.2 V until charging current reached 1/10 C. After charging and discharging was performed by discharging to 3.0 V with a constant current of 1.0 C, discharge capacity was measured.

After charging was performed under the same charging and discharging conditions, the battery was stored in a constant temperature bath at 60 °C for 4 weeks, and then discharged to a discharge voltage of 3 V at a high temperature of 60 °C. Then, the remaining capacity was measured. Thereafter, the recovery capacity was measured under the same charge and discharge conditions, and the recovery capacity value was calculated.

[Evaluation of HPPC charge resistance]

HPPC charge resistance was measured according to the method prescribed in the literature "Battery test manual for plug-in hybrid electric vehicles (2010, Idaho National Laboratory for the U.S. Department of Energy)".

After leaving a secondary battery fully charged to SOC 100 % at 60 °C for 5 hours, a voltage value, a charge/discharge current value corresponding to C-rate, a current change (ΔI), a discharge voltage change (ΔV), a charge voltage change (ΔV), a discharge resistance, and a charge resistance were measured. Then, charge/discharge current for each C-rate was briefly flowed for a certain time, and a resistance value was calculated with a slope value obtained from current and voltage change.

[Evaluation of high-temperature lifespan]

The secondary battery was charged with constant current at 45 °C at a current of 1 C rate until voltage reaches 4.20 V (vs. Li), followed by a cut-off at a current of 0.05 C rate while maintaining 4.20 V in a constant voltage mode. Subsequently, discharge was performed with a constant current of 1 C rate until voltage reached 3.0 V (vs. Li) (1st cycle). The cycle was repeated 300 times to evaluate high-temperature lifespan efficiency at 45 °C.

[High-temperature lifespan efficiency (%)]

High-temperature lifespan efficiency (%) = (300 cycle discharge capacity / 1 cycle discharge capacity) × 100

[Cell thickness measurement]

Initial cell thickness and cell thickness after high-temperature storage (60 °C, 4 weeks) were measured using a flat thickness measuring device (manufactured by Mitutoyo).

[Evaluation of cell thickness increase rate]

After charging to SOC 100 % (0.05 C cut-off) with 4.2V, 1C CC-CV at room temperature, a cell was left for 4 weeks at normal pressure exposed to the atmosphere at 60 °C using a sealed constant temperature device. When the thickness of the cell measured immediately after initial charging is referred to as 'A', and the thickness of the cell measured after being left at 60 °C for 4 weeks is referred to as 'B', the thickness increase rate was calculated using Equation 1 below. Here, the thickness of the electrode cell was measured using a flat thickness measuring device (manufactured by Mitutoyo).

[Equation 1]

$$\text{Thickness increase rate (\%)} = (B-A)/A \times 100$$

[Table 1]

| Classifi cation | Initial DCIR resist ance (mQ) | Discha rge resist ance after high-temper ature storag e (4 weeks, mΩ) | DCIR incr ease rate (%) | Recove ry capaci ty after high-temper ature storag e (mAh) | HPPC charge resist ance (mΩ) | High-temper ature lifesp an effici ency (%) | Initi al cell thick ness (mm) | Cell thickn ess after high-temper aturestorag e (4 weeks) (mm) | Thick ness incre ase rate (%) |
|---|---|---|---|---|---|---|---|---|---|
| Example 1 | 32.3 | 37.5 | 16.0 | 788.2 | 35.0 | 94.76 | 3.01 | 3.22 | 7.0 |
| Example 2 | 32.1 | 36.8 | 14.7 | 792.3 | 34.4 | 95.12 | 3.02 | 3.25 | 7.6 |
| Example 3 | 32.2 | 37.3 | 15.6 | 793.3 | 34.9 | 94.97 | 3.01 | 3.32 | 10.3 |
| Example 4 | 31.7 | 35.8 | 12.9 | 801.5 | 32.6 | 95.09 | 2.99 | 3.20 | 7.0 |
| Example 5 | 32.5 | 37.2 | 14.3 | 784.7 | 36.6 | 95.54 | 3.02 | 3.21 | 6.3 |
| Example 6 | 32.5 | 37.2 | 14.5 | 787.9 | 33.8 | 95.01 | 3.02 | 3.17 | 5.0 |
| Example 7 | 34.6 | 40.7 | 17.7 | 767.9 | 36.2 | 95.39 | 3.02 | 3.24 | 7.3 |
| Example 8 | 32.6 | 37.7 | 15.6 | 784.5 | 33.5 | 94.39 | 3.01 | 3.18 | 5.6 |
| Example 9 | 32.3 | 39.2 | 21.5 | 791.7 | 35.0 | 95.92 | 3.00 | 3.25 | 8.3 |
| Example 10 | 32.9 | 38.5 | 16.7 | 793.9 | 34.1 | 95.87 | 3.02 | 3.20 | 6.0 |
| Comparat ive Example 1 | - | - | - | - | - | - | - | - | - |

(continued)

| Classification | Initial DCIR resistance (mQ) | Discharge resistance after high-temperature storage (4 weeks, mΩ) | DCIR increase rate (%) | Recovery capacity after high-temperature storage (mAh) | HPPC charge resistance (mΩ) | High-temperature lifespan efficiency (%) | Initial cell thickness (mm) | Cell thickness after high-temperature storage (4 weeks) (mm) | Thickness increase rate (%) |
|---|---|---|---|---|---|---|---|---|---|
| Comparative Example 2 | 34.7 | 44.8 | 29.1 | 740.4 | 42.8 | 89.75 | 3.02 | 3.45 | 14.2 |
| Comparative Example 3 | 34.6 | 45.9 | 32.7 | 734.1 | 43.5 | 90.28 | 3.01 | 3.51 | 16.6 |
| Comparative Example 4 | 35.4 | 48.9 | 38.1 | 724.4 | 45.9 | 91.02 | 3.05 | 3.67 | 20.3 |

As shown in Table 1, in the case of the secondary batteries (Examples 1 to 10) including the acidic phosphorus pentoxide solution according to the present invention as an electrolyte additive, initial resistance, discharge resistance, and charge resistance are all low, resulting in excellent charging efficiency and output. In addition, recovery capacity is high after high-temperature storage, and cell thickness and thickness increase rate are low after high-temperature storage. Accordingly, a secondary battery with excellent long-term lifespan and high-temperature capacity retention rate may be provided. On the other hand, in the case of Comparative Example 1, in which only phosphorus pentoxide was added instead of the electrolyte additive according to the present invention, since some of the phosphorus pentoxide remained undissolved, manufacturing and testing of a secondary battery was impossible. In the case of Comparative Examples 2 and 3 in which the acid component was omitted from the electrolyte additive according to the present invention, it can be seen that all battery performances shown in Table 1 are poor.

Lastly, in the case of Comparative Example 4 including organic phosphorus oxide synthesized from phosphorus oxide and an organic acid, that is, an electrolyte additive in which the phosphorus oxide portion and the organic acid portion are covalently bonded, compared to Examples 1 to 10 in which the phosphorus oxide portion and the organic acid portion are intended to have noncovalent interaction, it can be seen that all battery performances mentioned above are poor.

## Claims

**1.** An electrolyte, comprising a compound represented by Chemical Formula 1 below and an acid:

[Chemical Formula 1] PxOy,

wherein P is phosphorus, O is oxygen, x is a multiple of 2, and y is 5x/2.

**2.** The electrolyte according to claim 1, wherein the electrolyte comprises 1 to 20 % by weight of the compound represented by Chemical Formula 1 and 80 to 99 % by weight of the acid.

**3.** The electrolyte according to claim 1, wherein, when the compound represented by Chemical Formula 1 is comprised in an amount of 1 to 20 % by weight, a pH of the acid is 3.5 or less.

**4.** The electrolyte according to claim 1, wherein the electrolyte is a liquid electrolyte, a semi-solid electrolyte, or a solid electrolyte.

**5.** The electrolyte according to claim 1, wherein the compound represented by Chemical Formula 1 is $P_2O_5$, $P_4O_{10}$, or a mixture thereof.

6. The electrolyte according to claim 1, wherein the acid is an inorganic acid or an organic acid.

7. The electrolyte according to claim 6, wherein the acid comprises one or more selected from phosphoric acid, nitric acid, sulfuric acid, acetic acid, trifluoromethanesulfonic acid, fluorosulfonic acid, and alkylsulfonic acid.

8. The electrolyte according to claim 1, wherein the electrolyte comprises an acidic PxOy solution obtained by dissolving the compound represented by Chemical Formula 1 in the acid.

9. The electrolyte according to claim 1, wherein the electrolyte comprises an organic solvent.

10. The electrolyte according to claim 9, wherein the organic solvent comprises one or more selected from the group consisting of ethylene carbonate (EC), diethyl carbonate (DEC), ethylmethyl carbonate (EMC), dimethyl carbonate (DMC), propylene carbonate (PC), dipropyl carbonate (DPC), butylene carbonate, methylpropyl carbonate, ethylpropyl carbonate, methyl propionate (MP), ethyl propionate (EP), and propyl propionate (PP).

11. The electrolyte according to claim 1, wherein the electrolyte comprises lithium salt.

12. The electrolyte according to claim 11, wherein the lithium salt comprises one or more selected from the group consisting of $LiPF_6$, LiFS, $LiF_4$, LiCl, LiBr, LiI, $LiClO_4$, $LiB_{10}Cl_{10}$, $LiCF_3SO_3$, $LiCF_3CO_2$, $LiAsF_6$, LiSbF6, $LiAlCl_4$, $CH_3SO_3Li$, $CF_3SO_3Li$, and $(CF_3SO_2)_2NLi$.

13. The electrolyte according to claim 11, wherein, based on 100 mol% in total of the electrolyte, the electrolyte comprises the lithium salt at a concentration of 0.6 to 2 M.

14. A method of preparing an electrolyte, comprising preparing an acidic PxOy solution by mixing a compound represented by Chemical Formula 1 below and an acid; and mixing the prepared acidic PxOy solution with an electrolyte solvent or lithium salt:

[Chemical Formula 1] PxOy,

wherein P is phosphorus, O is oxygen, x is a multiple of 2, and y is 5x/2.

15. The method according to claim 14, wherein the acidic PxOy solution has a pH of 3.5 or less.

16. An additive for secondary battery electrolytes, comprising a compound represented by Chemical Formula 1 below and an acid:

[Chemical Formula 1] PxOy,

wherein P is phosphorus, O is oxygen, x is a multiple of 2, and y is 5x/2.

17. The additive according to claim 16, wherein the additive comprises 1 to 20 % by weight of the compound represented by Chemical Formula 1 and 80 to 99 % by weight of the acid.

18. A secondary battery, comprising an anode, a cathode, and an electrolyte,
wherein the electrolyte is the electrolyte according to any one of claims 1 to 13.

19. The secondary battery according to claim 18, wherein the secondary battery is a battery for automobiles.

**INTERNATIONAL SEARCH REPORT**

International application No.
**PCT/KR2022/017032**

**A. CLASSIFICATION OF SUBJECT MATTER**

**H01M 10/0567**(2010.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 10/0567(2010.01); H01M 10/052(2010.01); H01M 10/0525(2010.01); H01M 10/40(2006.01); H01M 2/16(2006.01); H01M 4/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 전해질(electrolyte), 첨가제(additive), 오산화인(P2O5, phosphorus pentoxide), 메탄설폰산(methanesulfonic acid), 이차전지(secondary battery)

**C. DOCUMENTS CONSIDERED TO BE RELEVANT**

| Category* | Citation of document, with indication, where appropriate, of the relevant passages | Relevant to claim No. |
|---|---|---|
| X | US 2007-0031734 A1 (FAN, J.) 08 February 2007 (2007-02-08)<br>See claims 1, 2, 11 and 23; and paragraphs [0003], [0027], [0028], [0036], [0037], [0041] and [0044]-[0046]. | 1-7,9-13,16-19 |
| Y | | 8,14,15 |
| Y | FĂRCAŞIU, D. et al. Acidity studies of Eaton`s catalyst, methanesulfonic acid-phosphorus pentoxide. Journal of molecular catalysis. 1994, vol. 87, pp. 215-222.<br>See page 216, Experimental section; and table 1. | 8,14,15 |
| A | JP 2005-149786 A (SANYO ELECTRIC CO., LTD.) 09 June 2005 (2005-06-09)<br>See claims 1-3; and paragraphs [0010], [0012], [0013], [0017], [0043], [0044], [0047], [0048], [0060] and [0061]. | 1-19 |
| A | CN 1514510 A (XINXIANG NON-OXYGEN COPPER MATERIAL GENERAL PLANT et al.) 21 July 2004 (2004-07-21)<br>See entire document. | 1-19 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 February 2023** | **07 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2022/017032**

**C. DOCUMENTS CONSIDERED TO BE RELEVANT**

| Category* | Citation of document, with indication, where appropriate, of the relevant passages | Relevant to claim No. |
|---|---|---|
| A | CN 103915647 A (SHANGYU ANKA TRAILER FITTINGS CO., LTD. et al.) 09 July 2014 (2014-07-09) See entire document. | 1-19 |
| PX | WO 2022-035272 A1 (SOULBRAIN CO., LTD.) 17 February 2022 (2022-02-17) See claims 1-3, 5-7, 9 and 13; and paragraphs [0020], [0025]-[0027], [0029], [0031] and [0045]. | 1-19 |

Form PCT/ISA/210 (second sheet) (July 2022)

**INTERNATIONAL SEARCH REPORT**
**Information on patent family members**

International application No.
**PCT/KR2022/017032**

| Patent document cited in search report | Publication date (day/month/year) | Patent family member(s) | Publication date (day/month/year) |
|---|---|---|---|
| US 2007-0031734 A1 | 08 February 2007 | None | |
| JP 2005-149786 A | 09 June 2005 | None | |
| CN 1514510 A | 21 July 2004 | None | |
| CN 103915647 A | 09 July 2014 | CN 103915647 B | 15 February 2017 |
| WO 2022-035272 A1 | 17 February 2022 | KR 10-2022-0021414 A | 22 February 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008300126 A
- KR 101586199 B1